# EUROPEAN PATENT SPECIFICATION

(11) **EP 4 263 651 B1**
(45) Date of publication and mention of the grant of the patent: **20.11.2024**
(21) Application number: 21841115.5
(22) Date of filing: 15.12.2021
(51) Int. Cl.: C08G 18/08, C08G 18/12, C08G 18/28, C08G 18/32, C08G 18/48, C08G 18/75

(54) **ANTIFOG COMPOSITIONS AND RELATED METHODS**
ANTIBESCHLAGZUSAMMENSETZUNGEN UND ZUGEHÖRIGE VERFAHREN
COMPOSITIONS ANTIBUÉE ET PROCÉDÉS ASSOCIÉS

(30) Priority: 16.12.2020 US 202063125999 P
(43) Date of publication of application: 25.10.2023
(73) Proprietor: Lubrizol Advanced Materials, Inc., Cleveland, OH 44141-3247 (US)
(72) Inventor: LUBNIN, Alexander V., Cleveland, Ohio 44141-3247 (US); HALSTEAD, Joshua, Hinckley, Ohio 44233 (US); KENMUIR, Amanda, Cleveland, Ohio 44141-3247 (US)
(74) Representative: Evans, Sophie Elizabeth
(86) International application number: PCT/US2021/063434
(87) International publication number: WO 2022/132855

(56) References cited:
- EP-A2- 2 714 493
- EP-B1- 2 714 493

## Description

### TECHNICAL FIELD

The disclosed technology relates to antifog polyurethane compositions and methods of making and using such compositions.

### BACKGROUND

Recent events, such as the COVID-19 pandemic, have led to a drastic increase in the demand for personal protective equipment, including face-covering equipment, which may have a tendency to fog from respiration of the person wearing the equipment, or other sources of moisture. Other substrates and/or surfaces may also have a tendency to fog from moisture in the environment, such as looking glasses in industrial equipment or windows in steam rooms. One solution to this problem is to coat the susceptible surface with an antifog coating. Antifog coatings prevent formation of light-scattering and/or vision-obscuring droplets of moisture on a surface, such as by creating a hydrophilic surface and thus minimizing surface tension, so that condensed water spreads into a uniform thin film which does not scatter light as readily. Surfactants, which work by minimizing surface tension, are sometimes not suitable because they are not durable, and therefore can be easily washed or rubbed off the surface.

The disclosed technology, therefore, solves the problem of fogging of a surface by providing a durable coating composition which reduces or eliminates fogging on the surface.

### SUMMARY

The subject matter, disclosed herein, provides an antifog hydrophilic polyurethane composition comprising: (a) from 20% to 70% by weight side-chain ethylene oxide monomeric units, based on the total weight of the polyurethane; (b) from 10% to 100% by weight of at least one low-molecular-weight main-chain polyol having a number-average molecular weight of from 200 to 900 g/mol, based on the total weight of main-chain polyols present in the polyurethane; and (c) an amount of acid-functional units effective to provide an acid number of from 1 to 100 mg KOH/g to the polyurethane. The polyurethane composition may be made via known methods of making such compositions, considering the compositional features described herein. Suitable examples of polyurethane synthesis methods may be found in Dieterich, Dieter, "Aqueous emulsions, dispersions and solutions of polyurethanes; synthesis and properties", Progress in Organic Coatings, V. 9, p. 281 (1981). The polyurethane composition may be provided in a form, such as via a solvent-borne polyurethane composition, a thermoplastic polyurethane, or a polyurethane dispersion.

These polyurethane compositions may be used in coating compositions, such as to provide durable coatings with antifog properties. Such coating compositions may be made via known methods of making such compositions, considering the compositional features described herein, and may be used in methods of reducing fogging of a surface of a substrate, comprising applying the coating composition to a surface.

### BRIEF DESCRIPTION OF THE FIGURES

FIG. 1 shows a diagram of an illustrative polymer structure.
FIG. 2 shows a diagram of an illustrative polymer structure.
FIG. 3 shows a diagram of an illustrative polymer structure.

### DETAILED DESCRIPTION

Various features and embodiments of the present subject matter will be described below.

As used herein, the indefinite article "a" is intended to mean one or more than one. As used herein, the phrase "at least one" means one or more than one of the following terms. Thus, "a" and "at least one" may be used interchangeably. For example "at least one of A, B or C" means that just one of A, B or C may be included, and any mixture of two or more of A, B and C may be included, in alternative embodiments.

Provided is an antifog hydrophilic polyurethane composition comprising: (a) from 20% to 70% by weight side-chain ethylene oxide monomeric units, based on the total weight of the polyurethane; (b) from 10% to 100% by weight of at least one low-molecular-weight main-chain polyol having a number-average molecular weight of from 200 to 900 g/mol, based on the total weight of main-chain polyols present in the polyurethane; and (c) an amount of acid-functional units effective to provide an acid number of from 1 to 100 mg KOH/g to the polyurethane.

Polyurethane compositions of the present subject matter are conveniently referred to as polyurethanes because they contain urethane groups. The polyurethane compositions could be more accurately described as poly(urethane/urea)s if the active hydrogen-containing compounds are polyols and/or polyamines. It is well understood by those skilled in the art that "polyurethanes" is a generic term used to describe polymers obtained by reacting isocyanates with at least one hydroxyl-containing compound, amine-containing compound, or mixture thereof. It also is well understood by those skilled in the art that polyurethanes may also include allophanate, biuret, carbodiimide, oxazolidinyl, isocyanurate, uretdione, ether, ester, carbonate, amide, and other linkages in addition to urethane and/or urea linkages. Non-isocyanate routes are also contemplated for producing the subject polyurethanes, as would be understood by those of skill in the art.

As used herein, the term "antifog", as it applies to the compositions of the present subject matter, means: (i) a composition which is capable of at least a 20% reduction of fogging of the treated surface for at least 8 seconds when exposed to a source of water at 50 °C, as compared with an untreated surface; and/or (ii) a composition which is capable of allowing a substrate/surface to conform with at least one of the test methods described below.

Antifog coatings rely on one of two mechanisms which exploit the opposite interplays of relative surface tensions.

The first mechanism employs the so-called Lotus effect which is displayed by superhydrophiobic surfaces. These surfaces have very low surface tension compared to water, so that a droplet of water cannot adhere to the surface and immediately rolls off the surface.

The second more conventional mechanism relies on an instant spreading of water on the surface with high surface tension, creating a uniform sheet of water that scatters very little light. This approach requires the use of hydrophilic substances, and for the antifog articles, which do not require durability, the use of surfactants and ethoxylated compounds is a common practice.

For coatings and films with durable antifog performance, polymers with affinity to water may be used. There are two distinct phenomena which impact the clarity and antifog performance of such hydrophilic polymers.

The first phenomenon is related to the events on the surface upon deposition of the water droplets. If the surface is not instantly wetted out by water, the droplets stay on the surface without spreading to a significant degree. In this case, a multitude of curved air-water interfaces scatter the light in all directions, due to the difference in refractive indexes of water (Rf=1.333) and air (Rf=1), and create the foggy appearance hindering the viewing through the film or the coated optically clear substrate. This phenomenon is a short-term event which occurs on the scale of seconds or even fractions of a second.

The second phenomenon is related to the events in the bulk of the polymer. Complete optical clarity can be achieved when the refractive index is constant through the material in the viewing direction. Any change in refractive index will result in a loss of transparency due to the refraction and scattering. Polymers, in general, are non-uniform conglomerates of macromolecules with different compositions, different monomer unit distributions along the chain, and different molecular weights. In essence, polymers have internal inhomogeneities. When a polymeric film is exposed to water or a humid environment, such as human breathing, perspiration or steam, the water molecules can diffuse into the bulk of the film. A diffusing water will preferentially partition into the domains with higher hydrophilicity. Since refractive indexes of conventional polymers range from ~1.45 to 1.6 and the refractive index of water is 1.333, there will develop a difference in refractive indexes between the hydrophilic hydrated and hydrophobic non-hydrated domains. In addition, as the absorption of water by the polymer progresses, the hydrophilic domains will increase in size and their dimensions will shift in the direction of the length of the visible light. Both the refractive index and dimension effects will increase the scatter of light and reduce the clarity of the film. The diffusion of water molecules and hydration of the polymer is a slow process which can take up to several hours and may lead to a gradual development of the haze of the initially wet but clear coating.

Thus, two different tests may be needed to gage both short-term and long-term effects of moisture on polymer clarity.

Antifog Test Method (short-term test method): A sample to be tested for fogging is placed over a beaker of water heated to 75 °C. After 1 minute, a 60-degree gloss measurement is taken using a standard gloss meter (such as a gloss meter available from BYK or Elcometer), which measures the specular reflection of a surface by projecting a beam of light at a fixed intensity and angle onto a surface and measuring the amount of reflected light at the opposing angle. (As fog collects on a surface, it scatters light and the gloss value decreases.) The gloss meter is calibrated such that 100 gloss units equals perfect reflection, so the difference between the gloss reading and 100 is the percentage of light scattered. Using this method, a coating would be considered to provide antifogging properties if (1) the coated sample tested according to this method achieves a gloss reading of at least 60 gloss units after a minimum of 10 seconds of exposure and/or (2) the coated sample shows at least a 50 point better gloss reading than an uncoated sample after a minimum of 10 seconds of exposure when both are tested according to this method. Thus, if this method is used to determine antifogging properties, embodiments of the present subject matter may include that the polyurethane composition(s) and/or coating composition(s) disclosed herein are capable of providing a gloss reading of at least 60 (such as 65, 70, 75, or 80) after a minimum of 10 (such as 20, 30, 40, 50, or 60) seconds exposure when tested according to the Antifog Test Method.

Long-Term Test Method: The boundaries between clear (transparent) and hazy (foggy, translucent, or opaque) are subjective and depend on the observer. To quantify the degree of clarity, the ASTM D-1003 Standard Test Method for Haze and Luminous Transmittance of Transparent Plastics may be used. It measures a total transmittance which is the ratio of transmitted light to the incident light. Conventionally, the object is deemed transparent if the light transmission is greater than 85%. The optical clarity decreases with increasing thickness of the tested sample and, therefore, thickness should be specified. In certain embodiments, a sample may be considered to be transparent if the light transmittance according to this test method is greater than 85% (such as greater than 86%, 87%, 88%, 89%, 90%, 91%, 92%, 93%, 94%, 95%, 96%, 97%, 98%, or 99%). In certain embodiments, a sample may be considered to be transparent if the light transmittance according to this test method is 100%.

Without wishing to be limited by theory, it is believed that the fogging of a surface depends on the rate at which droplets form versus the rate at which the droplets dissipate. Therefore, in many situations, whether a surface fogs when exposed to moisture, is an all-or-nothing proposition. If the condensation forms faster than it dissipates, a surface will be significantly fogged in a short amount of time, such as about 5 seconds. If the condensation dissipates faster than it forms, a surface will remain unfogged indefinitely (if an antifog coating is applied to the surface, this assumes that the coating does not degrade). Thus, to have partial fogging, the dissipation rate and the formation rate of the droplets on a particular surface would have to be similar.

In other embodiments, the polyurethane composition(s) and/or coating composition(s) disclosed herein may be capable of providing antifog properties if they allow a substrate to pass certain standard test methods, such as the antifog test methods described in EN 166:2001 or the ASTM F659 version available at time of filing of the present application.

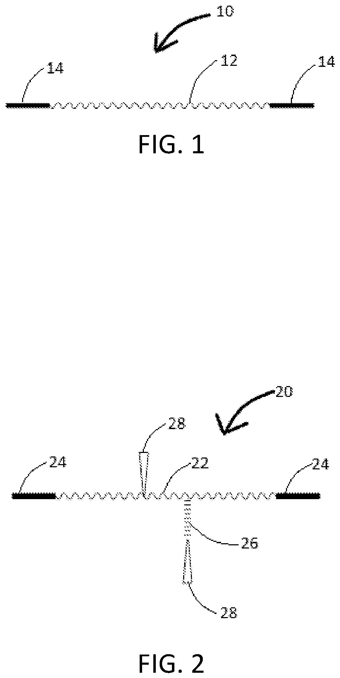

It is known to those of skill in the polymer sciences that a polymer is a chemical compound or mixture of macromolecules produced by reacting monomers to form repeating units. In the simplest case of polyethylene, referring to FIG. 1, the polymer (10) is comprised of repeating medial CH₂ groups in the main chain (12) with two terminal end groups, such as CH₃ groups, on each end (14).

Often, (referring to FIG. 2) polymers (20) with a main chain (22) and end groups (24) may have branching points which result in the formation of side (also referred to as "tethered" or "lateral") chains (26) and groups or side arms (28).

As the number and/or the length of the branching points increase, it may become difficult to define which portions of the polymer form the main chain of the polymer, and which form the side chains of the polymer. The following description offers guidance to achieve unequivocal descriptions of the polymer topology.

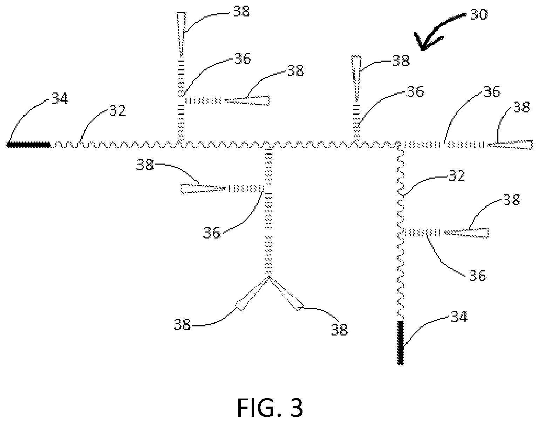

Therefore, as used herein, the term "main chain" or "main-chain" refers to that portion of the polymer which forms the longest path (*i.e.,* the highest number of atoms bonded together to form a linear polymer backbone) from one end group to another, without passing through the same monomeric unit twice. For example, FIG. 3 shows a polymer (30) having a main chain (32). The ends of the main chain (32) are thus considered to be the end groups or terminal groups (34) of the polymer (30). Any monomeric units or polymer segments which branch off of the main chain are thus considered to individually be a "side chain" or "side-chain" (36). End groups (38) of the side chains (36) are simply considered side-chain end groups, and are not considered terminal groups or end groups of the polymer (30) as a whole. The ends (34) of the main chain (32) and the ends (38) of the side chains (36) may be identical, but only the ends of the longest path are designated as terminal groups (34) of the polymer (30).

Occasionally, a chain may branch into two identical arms or end groups. In these cases, it does not matter which group is referred to as the terminal group in view of symmetry considerations; alternatively, both groups of the branch may be combined and designated as a double-tailed end group.

Star shaped polymers and dendrimers present an interesting case when they have perfect spherical symmetry. In these cases, the above definitions are applied to a single arm which emanates from the core; the rest of the arms, combined, constitute the end group for the selected arm.

The poly(ethylene oxide) (PEO) side-chains may be incorporated into the polyurethane by methods well known to those skilled in the art. The PEO chain may be attached to an isocyanate monomer or to an isocyanate-reactive monomer such as alcohols, thiols and amines. Some examples are described in U.S. Pat. No. 3,905,929, U.S. Pat. No. 3,920,598, US 5,314,942 and U.S. Pat. No. 5,700,867.

In certain embodiments, compounds having PEO side chains may contain on average two reactive groups which may participate in building a polyurethane as described herein.

Some methods of incorporating side-chains are described below. In all of these illustrative, non-limiting methods, the number-average molecular weight of the PEO chains can vary in the range from 44 to about 10,000 g/mol, such as in the range from about 250 to about 5,000 g/mol, or from about 500 to about 2,000 g/mol. PEO chains, in addition to the ethylene oxide units, may also contain other alkylene oxide comonomers such as propylene oxide, butylene oxide, styrene oxide, tetrahydrofuran, and the like. The comonomers may be randomly distributed along the chain and/or be present in the form of blocks, *i*.*e*., uninterrupted sequential runs of the same units. Their content may vary in a broad range as long as it does not impair the final polymer performance. The ethylene oxide content in such copolymers may be at least 50% by weight, such as at least 70% by weight, or at least 90% by weight. The functionality of the PEO side-chain monomers may be about two, but higher functionalities, such as tri-, tetra-, *etc.,* are also contemplated.

Method 1: Suitable side-chain PEO diols may be obtained by reacting one mole of a diisocyanate with approximately one mole of a polyethylene oxide) monoether or monoester and subsequently reacting the formed adduct with approximately one mole of a dialkanolamine. Diisocyanates having groups with different reactivities are preferred and include isophorone diisocyanate (IPDI), 2,4-toluene diisocyanate (TDI), diphenylmethane diisocyanate (MDI) and hydrogenated diphenylmethane diisocyanate (H12MDI). The higher the difference in the reactivities of the isocyanate groups, the more selective the first- and second-stage reactions will be. PEO monoethers include the reaction products of ethylene oxide with monohydric alcohols such as methanol, ethanol, butanols, benzyl alcohol, phenol and phenol derivatives. Examples include polyethylene oxide) monomethyl ethers known as MPEGs. MPEGs can be replaced with corresponding polyetheramines, such as Jeffamine^{®} Monoamines M Series from Huntsman, in which case the product will be a urea. The use of thiol-terminated PEOs is also contemplated. Examples of dialkanolamines include diethanolamine and dipropanolamine. The use of dialkanol polyamines instead of dialkanolamine will result in the formation of diols with multiple PEO side chains. An example of such polyamine is N,N'-*bis*(2-hydroxyethyl)ethylenediamine which will yield a diol with two PEO side chains.

Method 2: Suitable side-chain PEO polyisocyanates may be obtained by reacting polyisocyanates, which have more than two isocyanate groups with PEO monoethers and their alternatives described in Method 1. Thus, a reaction of one mol of triisocyanate with one mol of PEO monoether will result in a product which average composition can be described as diisocyanate with one PEO side chain. An example is a reaction of one mol of hexanediisocyanate (HDI) trimer with one mole of MPEG. In general, a reaction of *n-*functional polyisocyanate with *m* mols of PEO monoether will produce on average an (*n-m*)-functional isocyanate with *m* PEO side chains.

Method 3: Suitable side-chain PEO polyisocyanates may be obtained by reacting the first-stage intermediate urethane monoisocyanate with the attached PEO chain, which is described in Method 1, with additional diisocyanate to form an allophanate diisocyanate having a pendent PEO chain.

Method 4: Suitable PEO side-chain aminoalcohol monomers can be made via Michael addition of suitable polyetheramines onto hydroxy-functional acrylic monomers. Examples of such acrylic monomers include 2-hydroxyethyl acrylate, 2-hydroxypropyl acrylate, 4-hydroxybutyl acrylate, diethylene glycol monoacrylate, triethylene glycol monoacrylate, tetraethylene glycol monoacrylate, *etc.* Suitable polyetheramines are available from Hunstman under Jeffamine^{®} Monoamines M Series trade name.

Method 5: Another variant of the Michael addition is the reaction of polyamines carrying at least two primary amine groups with ethoxylated acrylic monomers which have no NCO-reactive groups. Examples of suitable polyamines include ethylenediamine (EDA), isophorone diamine (IPDA), diethylenetriamine (DETA), triethylenetetramine (TETA), tetraethylenepentamine (TEPA), Jeffamine^{®} D, ED and EDR Series from Huntsman, polyethylenimine (PEI), *etc.* Examples of suitable ethoxylated acrylic monomers include polyethylene glycol) methyl ether acrylates with different molecular weights such as Bisomer^{®} S10W and Bisomer^{®} S20W from GEO Specialty Chemicals.

Method 6: Suitable PEO side-chain monomers can be made via Michael addition of polyetheramines with secondary amino functionality, such as Jeffamine^{®} Secondary Amines SD and ST Series from Huntsman, with diol acrylates such as glycerol monoacrylate, trimethylolpropane monoacrylate, or pentaerythritol diacrylate.

Method 7: Instead of acrylates and amines, Michael addition can be conducted as described in Methods 4, 5 and 6 with the use of corresponding methacrylates and thiols. Suitable thiols can be made, for example, by esterification of terminal hydroxyl groups of the aforementioned MPEGs with mercaptoacetic acid.

Method 8: In another embodiment, reacting oxiranes (epoxides) with the aforementioned polyetheramines carrying one primary amine group can produce aminoalcohols with tethered PEO chain. Reacting diepoxides with polyetheramines carrying one secondary amine group will result in a diol with two PEO side chains.

Method 9: In the first stage, a triol is converted into a cyclic acetal or ketal by reaction with an aldehyde or ketone catalyzed by a strong acid; water is azeotropically distilled off. The remaining alcohol group is ethoxylated, and the terminal alcohol is converted into an ether via, for example, a reaction with dimethylsulfate or the Williamson ether synthesis by converting the alcohol into an alkoxide and then reacting it with organohalide forming an ether. In the final step, the cyclic acetal or ketal is hydrolyzed by water in the presence of a strong acid catalyst which releases the two protected alcohol groups.

Illustrative active hydrogen-containing compounds having polyethylene oxide) side chains are trimethylol propane monoethoxylate methyl ethers available as Tegomer^{®} D-3403 from Evonik and as Ymer^{™} N90, Ymer^{™} N120 and Ymer^{™} N180 from Perstorp.

Combinations of the above-described side-chain PEO monomers are also contemplated.

The above-described tethered monomers may be used in polyurethane synthesis as chain extenders or as comonomers in polyester, polyether, polycarbonate and polyamide polyols. Such polyols may be used either in combination with tethered monomers or by themselves.

PEO side chains may also be introduced into the polymer by a variety of post-polymerization reactions such as, for example, reaction of PEO carrying epoxy or amino end groups with carboxylic group in the polymer. The latter may be introduced by, for example, using dimethylol propanoic acid in the synthesis of polyurethane.

The amount of the at least one low-molecular-weight main-chain polyol (having a number-average molecular weight of from 200 to 900 g/mol) is defined herein based on the total weight of main-chain polyols present in the polyurethane. It is generally known that main-chain polyols represent the "soft segment" of a polyurethane composition. Thus, the amount of the at least one low-molecular-weight main-chain polyol may be considered to be based on the total weight of the soft segment, which overall will reduce the molecular weight of each polyol which makes up the soft segment. Isocyanates and other molecules are known to represent the "hard segment" of a polyurethane composition. Generally, the soft segment comprises 80% (such as 75%, 70%, 65%, 60%, 55%, or 50%) or less by weight of the main-chain of a polyurethane, while the hard segment comprises 20% (such as 25%, 30%, 35%, 40%, 45% or 50%) or more by weight of the main chain of a polyurethane, based on the total weight of the main chain.

Without wishing to be limited by theory, it is believed that the interface between the soft segment and the hard segment of a polyurethane composition is where light is scattered. The ratio of soft segment to hard segment, as well as the size of the domains of each segment, may determine the wavelength(s) of light which are scattered by the polyurethane composition. Thus, if the size of a hard segment domain is comparable or longer than the wavelength of the light, the light with that wavelength will be scattered by the polyurethane composition. Using short, or low-molecular-weight polyols for the soft segment may hinder the hard segments finding each other and coalescing into larger domains, thus reducing the size of the hard-segment domains. This may result in virtually no scattering of the visible light and a resulting transparent film. Using these principles, it is possible to tailor the light-scattering properties of a polyurethane composition such that the composition is optically clear. Furthermore, it may be desirable to control the amount of the main-chain hydrophilic polyols since they can induce swelling of the main-chain segments when exposed to water, as swelling will alter the relative sizes of the soft-segment domains, thus changing light scattering properties. One way to reduce swelling of the polyurethane is to minimize the amount of hydrophilic monomeric units (such as ethylene oxide monomeric units) in the main chain. Minimizing hydrophilic units will also render the light scattering properties of a polyurethane less susceptible to the exposure to moisture/water.

As used herein, the phrase "number-average molecular weight" (*M*ₙ) means the total weight of all the molecules in a sample, divided by the total number of molecules in a sample. Number-average molecular weight may be measured according to known methods. For example, gel permeation chromatography (GPC) may be used to measure number-average molecular weight.

An exemplary GPC method is performed using a high-temperature GPC system (Agilent PL GPC-220 with refractive index detector), with the following conditions: Columns: PLgel Mixed-B 10 um 300 x 7.5 mm (2 sets) with PLgel Guard 50 x 7.5 mm; Column temperature: 100 °C; Flow rate: 1.0 ml/min; Injection volume: 200 µl; Mobile phase: 0.02 M NaNO₃ and 250 ppm BHT in N,N'-dimethylacetamide (DMAc), 99.96% (OmniSolv^{®} from MilliporeSigma). Sample preparation: 0.04 gram of the sample is weighed in a 1 oz bottle. DMAc mobile phase (6.5 ml) is added in the sample bottle. The solution is placed on the shaker overnight. Then, it is placed into an oven at 100 °C for 2 hours. The sample solution is filtered through 0.45 um PTFE disposable syringe filter into autosampler vial. The molecular weight averages of the polymers are calculated based on polystyrene standards (Agilent EasiVial PS GPC/SEC Calibration Standard Kit with molecular weight range from 162 to 6,570,000 g/mol).

Suitable polyols which may be used as the at least one main-chain polyol having a number-average molecular weight of from 200 to 900 g/mol include polyester polyols, polyether polyols, polycarbonate polyols, polyacetal polyols, polyester amide polyols, polyamide polyols, fluorinated polyols, polythioether polyols, hydrocarbon polyols, polysiloxane polyols, and combinations thereof (such as in the form of mixtures and/or block copolymers). In embodiments in which a degree of pre-crosslinking is desired, tri- and polyfunctional monomers, and/or polyols may be used. In certain embodiments, polyester polyols, polyether polyols, and/or polycarbonate polyols may be preferred.

Polyester polyols may be derived from dibasic carboxylic acids and dihydric alcohols. Acid anhydrides and esters may also be used as starting monomers. Diacids can be aliphatic, cycloaliphatic, unsaturated and/or aromatic.

Aliphatic acids may be of the general formula HO₂C(CₙH₂ₙ) CO₂H, where n is 0 or any integer number. These may include: oxalic acid, malonic acid, succinic acid, glutaric acid, dimethylmalonic acid, adipic acid, pimelic acid, dimethylglutaric acid, suberic acid, azelaic acid, dimethylpimelic acid, sebacic acid, undecanedioic acid, dodecanedioic acid, and the like. Use of polybasic acids, such as 1,2,4-butane tricarboxylic acid, and/or 1,2,3,4-butane tetracarboxylic acid, is also contemplated.

Cycloaliphatic acids may include isomers of cyclobutenedicarboxylic acid, cyclopentanedicarboxylic acid, and cyclohexanedicarboxylic acid (such as hexahydrophthalic acid), and their homologs.

Unsaturated acids may contain one or more double and/or triple bonds in any of the above acids. Non-limiting examples include maleic acid, fumaric acid, tetrahydrophthalic acid, 5-norbornene-2,3-dicarboxylic (endic) acid, dimer acids, and the like.

Aromatic acids may include phthalic acid, isophthalic acid, terephthalic acid, trimellitic acid, isomers of naphthalenedicarboxylic acid, and the like.

Anhydrides and/or esters of the above acids may be used as starting monomers in the polyester polyol synthesis, such as phthalic anhydride, dimethylterephthalate, and dimethylcyclohexanedicarboxylate.

Apart from oxygen, other heteroatoms may be present, such as halogens or chalcogens. Examples include tetrachlorophthalic anhydride, tetrabromophthalic anhydride, and chlorendic acid. 5-(Sodiosulfo)isophthalic acid (5-SSIPA) contains sulfur.

Dihydric alcohols may be envisioned by replacing the carboxylic groups in the above acids with hydroxyl groups. Examples of suitable alcohols include ethylene glycol, 1,2-propanediol, 1,3-propanediol, 1,2-butanediol, 1,3-butanediol, 1,4-butanediol, 2-methyl-1,3-propanediol, neopentyl glycol, 1,2-pentanediol, 1,5-pentanediol, 1,2-hexanediol, 1,6-hexanediol, 1,2-octanediol, 1,8-octanediol, 1,9-nonanediol, 1,12-dodecanediol, 3-Methyl-1,5-pentanediol, 2-butyl-2-ethyl-1,3-propanediol, 2-ethyl-1,3-hexanediol, 2,4-diethyl-1,5-pentanediol, 2-methyl-1,8-octanediol, isomers of cyclohexanedimethanol, 2,2,4-trimethyl-1,3-pentanediol, ethylhexylglycerine, diethylene glycol, triethylene glycol, tetraethylene glycol, polyethylene glycol, dipropylene glycol, polypropylene glycol, cyclododecanediol, styrene glycol, hydroxypivalyl hydroxypivalate, hydroquinone bis(2-hydroxyethyl)ether (HQEE), isosorbate, 2,2,4,4-tetramethyl-1,3-cyclobutanediol, 2-butene-1,4-diol, 2,2-bis(4-hydroxyphenyl) propane, 2,2-bis(4-hydroxycyclohexyl) propane, pinanediol, camphanediol, tricyclodecane dimethanol (TCDDM), hydroxylated bisphenols, diols derived from dimer fatty acids, bis(2-hydroxyethyl)sulfone, 2,3-dibromo-1,4-butenediol, dibromoneopentylglycol, tetrabromobisphenol-A, diethyl-N,N-bis(2-hydroxyethyl)-aminomethylphosphonate. Diols containing hindered low-reactivity tertiary carboxylic acid groups may be used to prepare polyols with unreacted acid functionality. Such diols include dimethylol propanoic acid and dimethylol butanoic acid.

The diols described in the previous paragraph may also be used as chain extenders in certain embodiments of the subject polyurethanes.

Examples of commercially-available polyester polyols suitable for use as the main-chain polyol having a number-average molecular weight of from 200 to 900 g/mol include (number-average molecular weight in g/mol is indicated in parentheses unless the molecular weight is indicated in the name of the product):
- Piothane^{®} by Panolam Industries International: 500 BA, 700 BA, 500 CA, 500 DEA, 360 DP, 560 DP, 550 EA, 700 EA, 830 EA, 90-850 EPA, 500 HA, 650 HA, 70-500 HAI, 67-500 HNA, 500 HP, 530 MPA, 550 NA, 500 PA.
- Fomrez^{®} by Chemtura: 55-225 (500), 22-165 (700), 1066-310 (360), 66-225 (500), F15-175 (640), 11-225 (500), 1066-560 (200), 1066-187 (600), 44-160 (700), 0021-1 (275).
- STEPANOL^{®} PS by Stepan: 1752 (640), 2002 (600), 3152 (350), 4002 (300).
- DICAP 600 (675) by GEO Specialty Chemicals.
- K-Flex^{®} by King Industries: 128 (470), 148 (480), 188 (490)
- Resinate^{®} C3851-100 (300) by Resinate Materials.
- Kuraray Polyol by Kuraray: 510 (500) and P-520 (500).
- Carpol^{®} PES by Carpenter: several grades with MW 300-500 g/mol.

Polyester polyols may be synthesized by ring-opening polymerization and copolymerization of cyclic esters and cyclic carbonates, including lactones, initiated from the above diols. Examples of such cyclic esters include α-acetolactone, β-propiolactone, γ-butyrolactone, β-butyrolactone, δ-valerolactone, ε-caprolactone, γ-methyl-ε-caprolactone, 6-methyl-ε-caprolactone, δ-valerolactone, δ- decalactone, ε-decalactone, ω-pentadecalactone, glycolide, and lactide.

Examples of commercially-available polylactones include (number-average molecular weight in g/mol is indicated in parentheses):
- Placcel^{®} polyols by Daicel Chemical Industries: 205 (530), 208 (830), 305 (550).
- CAPA^{®} by Solvay: 200 (550), 203 (400), 205 (830), 301 (300), 304 (240), 305 (540), 310 (900).

Condensation of hydroxycarboxylic acids with some diol is another synthesis route to make polyester polyols. Examples of such monomers include glycolic acid, 3-hydroxypropionic acid, lactic acid, α-hydroxybutyric acid, β-hydroxybutyric acid, γ-hydroxybutyric acid, ω-hydroxycaproic acid, 12-hydroxystearic acid, and the like.

Polyether polyols may be obtained by polymerizing alkylene oxides such as ethylene oxide, propylene oxide, butylene oxide, styrene oxide, tetrahydrofuran, epichlorohydrin, and trichlorobutylene oxide, or the mixtures of these alkylene oxides, in the presence of starters which contain reactive hydrogen atoms. Suitable starters include water and the dihydric alcohols set forth above for preparing the polyester polyols.

Examples of commercially available polyether polyols include (number-average molecular weight in g/mol is indicated in parentheses unless the molecular weight is indicated in the name of the product):
- Terathane^{®} by DuPont: 250 and 650.
- PolyTHF^{®} by BASF: 250 and 650.
- PTMG by Mitsubishi Chemical: 650 and 850.
- SIMULSOL^{™} by SEPPIC: NOHP (220), BPIP P (400) and PG 130 (750).
- Poly-G^{®} by Monument: 20-265 (425), 30-240 (700), 30-280 (600), 30-565 (300), 36-232 (725), 37-600 (280), 76-160 (735), 76-635 (265).
- VELVETOL^{®} H500 by Allessa.
- Carpol^{®} by Carpenter: PGP-400, GP-700, GP-725.
- PolyMEG^{®} made-to-order by Pennakem.
- Polymeg^{®} 650 by LyondellBasell.
- Polyglycol P-425 and PT 700 by Dow.

Polycarbonate polyols may be obtained by reacting the above diols with phosgene or carbonates, such as dimethylcarbonate, diethylcarbonate, ethylene carbonate, or diphenylcarbonate. Preferred diols are 1,3-propanediol, 2-alkylpropanediols, 1,4-butanediol, 1,5-pentanediol, neopentyl glycol, 1,6-hexanediol, 3-methyl-1,5-pentanediol, 1,9-nonanediol, 1,10-decanediol, 1,12-dodecanediol, 1,4-cyclohexanedimethanol, and isosorbide.

An alternative, albeit somewhat limited, route to synthesize polycarbonate polyols is via the reaction of carbon dioxide with epoxides (D.W. Fox, Polycarbonate, in: Kirk-Othmer encyclopedia of chemical technology, 3rd ed., Wiley-Interscience, New York, 1982, vol. 18, pp. 479-494.)

Examples of commercially-available polycarbonate polyols include (number-average molecular weight in g/mol is indicated in parentheses):
- Nippollan^{™} 976 (500) by Nippon Polyurethane Industry/TOSOH.
- Duranol^{™} by Asahi Kasei: T5650J (800), T5650E (500), G3450J (800), PCDX-02 (500).
- Ravercarb^{™} by Caffaro: 101 (500), 109 (900), 3505 (500).
- Eternacol^{®} by UBE: UH-50 (500), PH-50 (500), UM-90 (3/1) (900), UM-90 (1/1) (900), UM-90 (1/3) (900).
- Kuraray Polyol C-590 (500) by Kuraray.
- BENEBiOL^{™} by Mitsubishi Chemical: HS0840B (800) and HS0850 (800).
- Placcel^{®} by Daicel Chemical Industries: CD-205 (525), CD-208 (800), CD205PL (500).

An example of a commercially-available hydrocarbon polyol is Pripol^{™} 2033 dimer diol (540) by Croda.

The acid functionality of the subject polyurethane composition(s) contributes to good adhesion and mechanical properties of coatings made from the polyurethane composition(s), and can also be used to promote crosslinking of the polyurethane to improve durability.

In certain embodiments, the composition comprises from 20% to 50% (such as from 20% to 40%, or from 25% to 35%) by weight side-chain ethylene oxide monomeric units, based on the total weight of the polyurethane. In certain embodiments, the minimum amount of side-chain ethylene oxide monomeric units may be 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, or 49% by weight, based on the total weight of the polyurethane, and the maximum amount of side-chain ethylene oxide monomeric units may be 50%, 49%, 48%, 47%, 46%, 45%, 44%, 43%, 42%, 41%, 40%, 39%, 38%, 37%, 36%, 35%, 34%, 33%, 32%, 31%, 30%, 29%, 28%, 27%, 26%, 25%, 24%, 23%, 22%, or 21% by weight, based on the total weight of the polyurethane, each amount selected such that the minimum amount must be lower than the maximum amount in any particular embodiment.

In certain embodiments, the side-chain ethylene oxide monomeric units may be provided via a product which include ethylene oxide monomeric units and other monomeric units (co-monomers), such as propylene oxide monomeric units. In such embodiments, such a product would still be required to provide the desired amount of ethylene oxide monomeric units as described herein in order to achieve the results described herein.

In certain embodiments, it may be desirable to limit the amount of main-chain ethylene oxide monomeric units present in the polyurethane composition, as it is believed (without wishing to be limit by theory) that the hydrophilicity of such monomeric units may cause the main-chain of the polyurethane to swell, which can result in undesirable properties. Thus, in certain embodiments, the polyurethane composition comprises less than 25% (such as 24%, 23%, 22%, 21%, 20%, 19%, 18%, 17%, 16%, 15%, 14%, 13%, 12%, 11%, 10%, 9%, 8%, 7%, 6%, 5%, 4%, 3%, 2%, or 1%) by weight main-chain ethylene oxide monomeric units, based on the total weight of the polyurethane. In certain embodiments, the polyurethane composition may comprise from greater than 0% to 25% by weight main-chain ethylene oxide monomeric units, based on the total weight of the polyurethane. In certain embodiments, the minimum amount of main-chain ethylene oxide monomeric units may be 0%, greater than 0%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, or 24% by weight, based on the total weight of the polyurethane, and the maximum amount of main-chain ethylene oxide monomeric units may be 25%, 24%, 23%, 22%, 21%, 20%, 19%, 18%, 17%, 16%, 15%, 14%, 13%, 12%, 11%, 10%, 9%, 8%, 7%, 6%, 5%, 4%, 3%, 2% or 1% by weight, based on the total weight of the polyurethane, each amount selected such that the minimum amount must be lower than the maximum amount in any particular embodiment.

In certain embodiments, the polyurethane composition comprises from 20% to 100% (such as from 30% to 100%, or from 40% to 100%) by weight of the at least one low-molecular-weight main-chain polyol having a number-average molecular weight of from 200 to 900 g/mol, based on the total weight of main-chain polyols present in the polyurethane. In certain embodiments, the minimum amount of the at least one low-molecular-weight main-chain polyol having a number-average molecular weight of from 200 to 900 g/mol may be 10%, 15%, 20%, 25%, 30%, 35%, 40%, 45%, 50%, 55%, 60%, 65%, 70%, 75%, 80%, 85%, 90%, or 95% by weight, based on the total weight of main-chain polyols present in the polyurethane, and the maximum amount of the at least one low-molecular-weight main-chain polyol having a number-average molecular weight of from 200 to 900 g/mol may be 100%, 95%, 90%, 85%, 80%, 75%, 70%, 65%, 60%, 55%, 50%, 45%, 40%, 35%, 30%, 25%, 20%, or 15% by weight, based on the total weight of main-chain polyols present in the polyurethane, each amount selected such that the minimum amount must be lower than the maximum amount in any particular embodiment.

In certain embodiments, the at least one low-molecular-weight main-chain polyol may have a number-average molecular weight of from 200 to 800 g/mol, such as 200 to 700 g/mol, or 200 to 600 g/mol, or 300 to 900 g/mol, or 300 to 800 g/mol, or 300 to 700 g/mol, or 300 to 600 g/mol, or 400 to 900 g/mol, or 400 to 800 g/mol, or 400 to 700 g/mol, or 400 to 600 g/mol.

In certain embodiments, the polyurethane may comprise an amount of acid-functional units effective to provide an acid number of from 1 to 15 mg KOH/g (such as from 10 to 100 mg KOH/g, or from 10 to 15 mg KOH/g) to the polyurethane. In certain embodiments, the amount of acid-functional units may be effective to provide a minimum acid number of 1, 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, or 95 mg KOH/g to the polyurethane, and the amount of acid-functional units may be effective to provide a maximum acid number of 100, 95, 90, 85, 80, 75, 70, 65, 60, 55, 50, 45, 40, 35, 30, 29, 28, 27, 26, 25, 24, 23, 22, 21, 20, 19, 18, 17, 16, 15, 14, 13, 12, 11, 10, 9, 8, 7, 6, 5, 4, 3, or 2 mg KOH/g to the polyurethane, each amount selected such that the minimum must be lower than the maximum in any particular embodiment.

In certain embodiments, the acid-functional units may comprise at least one of carboxylic acids, phosphonic acids, or sulfonic acids. In certain embodiments, the acid-functional units may comprise at least one of dimethylol propanoic acid, dimethylol butanoic acid, or carboxylated polyols.

In certain embodiments, the polyurethane composition comprises: from 10% to 95% by weight of the at least one low-molecular-weight main-chain polyol having a number-average molecular weight of from 200 to 900 g/mol, based on the total weight of main-chain polyols present in the polyurethane; and at least 5% by weight of at least one main-chain second polyol having a number-average molecular weight of from 1,000 to 3,000 g/mol (such as from 2,000 to 3,000 g/mol), based on the total weight of main-chain polyols present in the polyurethane. In these embodiments, the amounts of the at least one low-molecular-weight main-chain polyol having a number-average molecular weight of from 200 to 900 g/mol described above are also possible, with the proviso that the maximum amount is 95% in these embodiments, to allow for at least 5% by weight of the at least one main-chain second polyol having a number-average molecular weight of from 1,000 to 3,000 g/mol, based on the total weight of main-chain polyols present in the polyurethane. Furthermore, the minimum amount of the at least one main-chain second polyol having a number-average molecular weight of from 1,000 to 3,000 g/mol may be 5%, 6%, 7%, 8%, 9%, 10%, 11%, 12%, 13%, 14%, 15%, 20%, 25%, 30%, 35%, 40%, 45%, 50%, 55%, 60%, 65%, 70%, 75%, 80%, 85%, or 90% by weight, based on the total weight of main-chain polyols present in the polyurethane.

In certain embodiments, the at least one acid group present in the polyurethane is salted with a biguanide free base. In these embodiments, the at least one acid group may independently be a free acid group or the acid group may be salted with a weak base which may be displaced by the biguanide free base.

In certain embodiment, the biguanide free base may comprise a bisbiguanide free base.

In certain embodiments, the biguanide free base may comprise at least one of chlorhexidine free base, alexidine free base, polyhexanide free base, or polyaminopropyl biguanide free base.

In certain embodiments, the at least one acid group is salted with a biguanide free base to create an ionic salt bond between the at least one free acid group and the biguanide.

In certain embodiments, the molar ratio of biguanide to the at least one acid group is from 1.2:1 to 0.1:1.

In certain embodiments, the biguanide free base is present in the polyurethane composition at an amount of from 0.25 to 50 wt. %, based on the total weight of the polyurethane composition. In certain embodiments, the biguanide free base may be present in the polyurethane composition in an amount of from 0.25 to 10 wt. %, based on the total weight of the polyurethane composition.

In certain embodiments, polyurethane compositions described herein provide a polymeric salt formed between chlorhexidine free base and the polyurethane composition(s) disclosed herein. Chlorhexidine free base's hydrolytic instability and low water solubility make it an unlikely candidate for incorporation into a waterborne system, yet a surprisingly stable and antimircobially active salt with polyurethanes was formed nonetheless. Without wishing to be bound by theory, it is postulated that the migration of the chlorhexidine free base from its solid phase through the aqueous phase into the polyurethane particle and ensuing salt formation is faster than chlorhexidine's hydrolysis. Thus, a considerable amount of chlorhexidine free base, if not all, survives the journey through the aqueous phase without been hydrolyzed. The polymeric salts of chlorhexidine free base were found to be surprisingly persistent, non-leaching, and durable. It was also found that, when this composition is applied to, such as coated onto, substrates, the chlorhexidine retains its antimicrobial efficacy, killing bacteria on contact and preventing the growth of bacteria on the surface. The latter is even more surprising in the view of chlorhexidine digluconate deactivation by cross-linked poly(acrylic acid) thickener which carries carboxylic groups that are similar to the carboxylic groups in the polyurethanes of the present subject matter ("Inactivation of chlorhexidine gluconate on skin by incompatible alcohol hand sanitizing gels." N. Kaiser, D. Klein, P. Karanja, Z. Greten, and J. Newman. American Journal of Infection Control, vol. 37, No. 7, pp. 569-573 (2009)).

Chlorhexidine belongs to a class of biguanides, namely bisbiguanides. The mechanism of the biguanide moiety's action relies on dissociation and release of the positively charged biguanide cation. Its bactericidal effect is a result of the binding of this cationic species to negatively charged bacterial cell walls. At low concentrations of chlorhexidine, this results in a bacteriostatic effect; at high concentrations, membrane disruption results in cell death. ("Chlorhexidine Gluconate" on page 183 in: Poisoning and Toxicology Handbook (4th Edn.), Jerrold B. Leikin and Frank P. Paloucek, Eds. (2008), Informa Healthcare USA, Inc.)

In the view of this mechanism, in certain embodiments, it is anticipated that other biguanide and bisbiguanides can replace chlorhexidine in part or in whole. These are disclosed in "Structural Requirements of Guanide, Biguanide, and Bisbiguanide Agents for Antiplaque Activity." J. M. Tanzer, A. M. Slee, and B. A. Kamay. Antimicrobial Agents and Chemotherapy, 12(6), pp. 721-729 (1977), and US Patent No. 4,670,592. Examples include, but are not limited to: alexidine, polyhexanide (polyhexamethylene biguanide, PHMB), polyaminopropyl biguanide (PAPB), and the like.

For the same mechanistic reason, in certain embodiments, it is anticipated that other acid groups or any other group that can form an ionic bond with chlorhexidine free base can replace carboxylic groups in part or in whole. Non-limiting examples include sulfonic and phosphonic acids.

In certain embodiments, provided are compositions of nonionically stabilized polyurethane dispersions/solutions chemically bonded to chlorhexidine free base via a salt linkage. Quite surprisingly, it was found that chlorhexidine maintained its biocidal properties even though it was immobilized by the polymer matrix through ionic bonding. Such polymeric salt compositions have been found to not only have high antimicrobial functionality, but also retained this functionality through leaching testing, enabling its use in a coating application to provide a surface with long-term antibacterial efficacy. The persistence and durability of antimicrobial properties are important because even biocidal surfaces can be soiled, and harmful microbes can start growing on the top of the dirt and contaminants. These contaminated surfaces need to be washed, and most cleaning solutions are water-based, which would result in leaching of chlorhexidine salts in conventional systems.

Chlorhexidine digluconate (CHG) is a prevailing form of chlorhexidine in antimicrobial applications. However, CHG tends to leach out of polymer compositions because of its high solubility in water: it is soluble in water to at least 50% (The Merck Index. 12^{th} Edn. page 2136 (1996)). It could be speculated that chlorhexidine cation might be able to migrate from its salt with gluconic acid to the free carboxylic acid of a polyurethane of the present subject matter via the metathesis reaction; however, the acidity of gluconic acid, which may be characterized by its pKa of 3.86, is stronger than that of carboxylic group in polyurethane. The pKa of the latter is estimated to be about 7.3, which means that it is substantially neutral. ("Hydrolytically-stable polyester-polyurethane nanocomposites." Paper No. 22.5. European Coatings Congress. March 18-19, 2013, Nuremberg, Germany. Alex Lubnin, Gregory R. Brown, Elizabeth A. Flores, Nai Z. Huang, Pamela Izquierdo, Susan L. Lenhard, and Ryan Smith.) This means that the gluconate anion's bond with chlorhexidine cation is stronger, and such a metathesis reaction will not occur.

Without wishing to be bound by theory, it was unexpectedly discovered that chlorhexidine free base had sufficient solubility in water to migrate from chlorhexidine-rich phases, through the aqueous phase, and into polyurethane particles and/or molecules having free (non-reacted and non-salted) carboxylic acid groups to form chlorhexidine salts with those carboxylic acid groups. This resulted in polyurethane compositions, such as solutions, dispersions, films, etc., having chlorhexidine present in a substantially non-migrating form that retains its biocidal activity, even though bound to a polymer.

Further disclosures regarding biguanides used in polyurethane compositions may be found in United States Provisional Patent Application Serial No. 62/937,381, filed on November 19, 2019.

In certain embodiments, provided is a solvent-borne polyurethane composition comprising the polyurethane composition(s) described above.

In certain embodiments, provided is a polyurethane dispersion comprising the polyurethane composition(s) described above.

In certain embodiments, provided is a thermoplastic polyurethane composition comprising the polyurethane composition(s) described above.

In certain embodiments, provided is a coating composition comprising at least one of the polyurethane composition(s) described above, the solvent-borne polyurethane composition described above, the polyurethane dispersion, or the thermoplastic polyurethane composition described above. The coating composition may comprise additional ingredients which are conventionally included in coating compositions. In certain embodiments, the coating composition may comprise at least one additional polymer blended with the polyurethane compositions(s) described above. In certain embodiments, the coating composition may allow a surface coated with the coating composition to provide antifog properties as described in detail above.

In certain embodiments, the polyurethane composition(s) described above may be included in the coating composition(s) in an amount of from 10% (such as 15%, 20%, 25%, 30%, 35%, 40%, 45%, or 50%) to 100% by weight, based on the total dry weight of the coating composition.

In certain embodiments, the at least one additional polymer may be present in the coating composition(s) in an amount of from 0% to 90% (such as 85%, 80%, 75%, 70%, 65%, 60%, 55%, or 50%) by weight, based on the total dry weight of the coating composition.

In certain embodiments, the coating composition(s) described above may further comprise at least one of a coalescent, a surfactant, a rheology modifier, a defoamer, or a crosslinker.

The coating composition(s) described above may be formulated with auxiliary additives known to those of skill in the art. Suitable examples are described below.

In certain embodiments, a coalescent may be present in the coating composition(s) in an amount of from 0.5% to 20% by weight, based on the total dry weight of the coating composition. Suitable coalescents include at least one of 2-butoxyethanol, dipropylene glycol dimethyl ether, alcohols, or ether alcohols.

In certain embodiments, a surfactant may be present in the coating composition(s) in an amount of from 0.1% to 1% by weight, based on the total dry weight of the coating composition. Suitable surfactants include at least one of silicone containing surfactants (such as BYK-349 available from BYK-Chemie GmbH), or non-ionic ethoxylated surfactants (such as TEGO^{®} Wet 500 available from Evonik).

In certain embodiments, a rheology modifier may be present in the coating composition in an amount of from 0.1% to 5% by weight, based on the total dry weight of the coating composition. Suitable rheology modifiers include at least one hydrophobically-modified ethylene oxide-based urethane rheology modifiers (such as ACRYSOL^{®} RM-8W available from The Dow Chemical Company).

In certain embodiments, a defoamer may be present in the coating composition in an amount of from 0.1% to 1% by weight, based on the total dry weight of the coating composition. Suitable defoamers include at least one of silicone-based defoamers or mineral-oil-based defoamers. Suitable commercially available defoamers include SURFYNOL^{®} DF-58 or SURFYNOL^{®} DF110 available from Evonik, or BYK-024 available from BYK-Chemie GmbH.

In certain embodiments, a crosslinker may be present in the coating composition in an amount of from 0.5% to 10% by weight, based on the total dry weight of the coating composition. Suitable crosslinkers include at least one of carbodiimides (such as CARBODILITE^{®} v04 available from Nisshinbo Chemical Inc.) or isocyanates (such as BAYHYDUR^{®} 3100 available from Covestro AG). In certain embodiments, if a crosslinker is present, the polyurethane composition may be a thermoset polyurethane composition.

When applied to a substrate, the coating compositions described above may be applied at a thickness of at least 25 (such as 30, 35, 40, 45, 50, 55, 60, 65, 70, 75, 80, 85, 90, 95, 100, 110, 120, 130, 140, 150, 160, 170, 180, 190, 200, 225, 250, 275, 300, 325, 350, 375, 400, 425, 450, 475, 500, 550, 600, 650, 700, 750, 800, 850, 900, 950, or 1,000) µm. In certain embodiments, the coating composition may be applied at a thickness of up to 5 (such as 4.9, 4.8, 4.7, 4.6, 4.5, 4.4, 4.3, 4.2, 4.1, 4, 3.9, 3.8, 3.7, 3.6, 3.5, 3.4, 3.3, 3.2, 3.1, 3, 2.9, 2.8, 2.7, 2.6, 2.5, 2.4, 2.3, 2.2, 2.1, 2, 1.9, 1.8, 1.7, 1.6, 1.5, 1.4, 1.3, 1.2, 1.1, or 1) mm. In certain embodiments, the coating composition may be applied at a thickness of from 25 (such as 30, 35, 40, 45, 50, 55, 60, 65, 70, 75, 80, 85, 90, 95, 100, 110, 120, 130, 140, 150, 160, 170, 180, 190, 200, 225, 250, 275, 300, 325, 350, 375, 400, 425, 450, 475, 500, 550, 600, 650, 700, 750, 800, 850, 900, 950, or 1,000) µm to 5 (such as 4.9, 4.8, 4.7, 4.6, 4.5, 4.4, 4.3, 4.2, 4.1, 4, 3.9, 3.8, 3.7, 3.6, 3.5, 3.4, 3.3, 3.2, 3.1, 3, 2.9, 2.8, 2.7, 2.6, 2.5, 2.4, 2.3, 2.2, 2.1, 2, 1.9, 1.8, 1.7, 1.6, 1.5, 1.4, 1.3, 1.2, or 1.1) mm.

In certain embodiments, provided are methods of reducing fogging of a surface of a substrate comprising applying the coating composition(s) described above onto the surface. In certain embodiments, the surface and the substrate are optically clear. As used herein, the term "optically clear" means that the surface/substrate allows a user to see through the surface substrate without significant loss of visual acuity; an optically clear surface/substrate need not be colorless, but may possess color, so long as optical clarity is maintained. In certain embodiments, the coating compositions do not significantly alter the optical clarity of the surface and/or the substrate.

In certain embodiments, the substrate may comprise a face shield, eye ware, eyeglasses, safety goggles, a scuba diving mask, swimming goggles, a motorcycle helmet, a space suit helmet, a mirror, a camera lens, a microscope lens, or a binocular lens.

### EXAMPLES

Example 1: The following materials were charged to a reactor equipped with a mechanical stirrer, thermocouple, and dry nitrogen flow: 225 grams polytetramethylene ether glycol with Mn -650 g/mol (PolyTHF^{™} 650 Polyether from BASF), 216 grams polyether-1,3-diol (Tegomer^{®} D 3403 from Evonik Industries), 22 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 337 grams methylene-*bis-*(4-cyclohexylisocyanate) (Vestanat^{®} H12MDI from Evonik Industries). The stirrer was then turned on, the mixture heated to 105 - 110 °C and stirred at this temperature for one hour. The prepolymer was cooled to about 90 °C, and 600 grams of it were charged with good mixing over 5 minutes to a vessel containing 1,100 grams DI water at ~20 °C and 0.6 grams BYK-028 defoamer (BYK). The mixture was stirred at 34 °C for ~90 minutes. The dispersion was then chain-extended by adding over 20 minutes 25 grams 35% solution of hydrazine in water. The dispersion was covered and mixed overnight. The grit-free final product filtered through a 100-micron filter without leaving any coagulum in the filter and had the following properties: solids content = 34% (at 80% power by microwave moisture analyzer CEM Smart 6^{™}); pH 4.9; Brookfield viscosity = 130 cP (spindle #3 at 20 RPM); particle size = 36 nm (Z-average, Malvern Zetasizer Nano - ZS).

Comparative Example 2: The procedure of Example 1 was followed with the use of the following components: 285 grams PolyTHF^{™} 650; 215 grams Tegomer^{®} D 3403; 0.4 grams pentaerythritol tetrakis(3,5-di-tert-butyl-4-hydroxyhydrocinnamate); 300 grams Vestanat^{®} H12MDI; 1,070 grams DI water; 0.6 grams BYK-028; and 21 grams of 35% solution of hydrazine in water. The grit-free final product filtered through a 100-micron filter without leaving any coagulum in the filter and had the following properties: solids content = 38% (at 80% power by microwave moisture analyzer CEM Smart 6^{™}); pH 5.9; Brookfield viscosity = 100 cP (spindle #3 at 20 RPM); particle size = 65 nm (Z-average, Malvern Zetasizer Nano - ZS).

Example 3: The following materials were charged to a reactor equipped with a mechanical stirrer, thermocouple, and dry nitrogen flow: 131 grams polytetramethylene ether glycol with Mn -650 g/mol (PolyTHF^{™} 650 Polyether from BASF), 162 grams difunctional polyethylene glycol monomethyl ether (Ymer^{®} N120 from Perstorp) , 6.0 grams of ethylene glycol (J.T. Baker), 16.5 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 284 grams methylene-*bis*-(4-cyclohexylisocyanate) (Vestanat^{®} H12MDI from Evonik Industries). The stirrer was then turned on, the mixture heated to 82 - 85 °C and stirred at this temperature for 45 minutes. 404 grams of the polymer were charged with good mixing over 5 minutes to a vessel containing 550 grams DI water at ~20 °C and 0.4 grams BYK-028 defoamer (BYK). The mixture was stirred at 34 °C for ~90 minutes. The dispersion was then chain-extended by adding over 20 minutes 24 g of a 17% solution of hydrazine in water. The dispersion was covered and mixed overnight. The grit-free final product filtered through a 75-micron filter without leaving any coagulum in the filter and had the following properties: solids content = 36% (at 80% power by microwave moisture analyzer CEM Smart 6^{™}); pH 5.2; Brookfield viscosity = 336 cP (spindle #3 at 20 RPM); particle size = 51 nm (Z-average, Malvern Zetasizer Nano - ZS).

Example 4: The following materials were charged to a reactor equipped with a mechanical stirrer, thermocouple, and dry nitrogen flow: 187 grams polytetramethylene ether glycol with Mn -650 g/mol (PolyTHF^{™} 650 Polyether from BASF), 132 grams difunctional polyethylene glycol monomethyl ether (Ymer^{®} N120 from Perstorp), 16.5 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 264 grams methylene-bis-(4-cyclohexylisocyanate) (Vestanat^{®} H12MDI from Evonik Industries). The stirrer was then turned on, the mixture heated to 82 - 85 °C and stirred at this temperature for 45 minutes. 411 grams of the polymer were charged with good mixing over 5 minutes to a vessel containing 550 grams DI water at ~20 °C and 0.4 grams BYK-028 defoamer (BYK). The mixture was stirred at 34 °C for ~90 minutes. The dispersion was then chain-extended by adding over 20 minutes 28g of a 17% solution of hydrazine in water. The dispersion was covered and mixed overnight. The grit-free final product filtered through a 75-micron filter without leaving any coagulum in the filter and had the following properties: solids content = 40% (at 80% power by microwave moisture analyzer CEM Smart 6^{™}); pH 5.1; Brookfield viscosity = 615 cP (spindle #3 at 10 RPM); particle size = 55 nm (Z-average, Malvern Zetasizer Nano - ZS).

Example 5: The following materials were charged to a reactor equipped with a mechanical stirrer, thermocouple, and dry nitrogen flow: 125 grams polytetramethylene ether glycol with Mn -650 g/mol (PolyTHF^{™} 650 Polyether from BASF), 162 grams difunctional polyethylene glycol monomethyl ether (Ymer^{®} N120 from Perstorp) , 30 grams of Dodecylhexadecanol (ISOFOL28^{®} Alcohol from Sasol), 16.5 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 262 grams methylene-bis-(4-cyclohexylisocyanate) (Vestanat^{®} H12MDI from Evonik Industries). The stirrer was then turned on, the mixture heated to 82 - 85 °C and stirred at this temperature for 45 minutes. 404 grams of the polymer were charged with good mixing over 5 minutes to a vessel containing 550 grams DI water at ~20 °C and 0.4 grams BYK-028 defoamer (BYK). The mixture was stirred at 34 °C for ~90 minutes. The dispersion was then chain-extended by adding over 20 minutes 27g of a 17% solution of hydrazine in water. The dispersion was covered and mixed overnight. The grit-free final product filtered through a 75-micron filter without leaving any coagulum in the filter and had the following properties: solids content = 37% (at 80% power by microwave moisture analyzer CEM Smart 6^{™}); pH 5.2; Brookfield viscosity = 436 cP (spindle #3 at 20 RPM); particle size = 36 nm (Z-average, Malvern Zetasizer Nano - ZS).

Example 6: The following materials were charged to a reactor equipped with a mechanical stirrer, thermocouple, and dry nitrogen flow: 131 grams polytetramethylene ether glycol with Mn -650 g/mol (PolyTHF^{™} 650 Polyether from BASF), 137 grams poly(ethylene glycol) methyl ether with Mn -1000 g/mol (Sigma), 18 grams of Trimethylolpropane (Brenntag NE), 16.5 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 296 grams methylene-*bis*-(4-cyclohexylisocyanate) (Vestanat^{®} H12MDI from Evonik Industries). The stirrer was then turned on, the mixture heated to 82 - 85 °C and stirred at this temperature for 45 minutes. 413 grams of the polymer were charged with good mixing over 5 minutes to a vessel containing 550 grams DI water at ~20 °C and 0.4 grams BYK-028 defoamer (BYK). The mixture was stirred at 34 °C for ~90 minutes. The dispersion was then chain-extended by adding over 20 minutes 29g of a 17% solution of hydrazine in water. The dispersion was covered and mixed overnight. The grit-free final product filtered through a 75-micron filter without leaving any coagulum in the filter and had the following properties: solids content = 39% (at 80% power by microwave moisture analyzer CEM Smart 6^{™}); pH 5.0; Brookfield viscosity = 36 cP (spindle #3 at 20 RPM); particle size = 63 nm (Z-average, Malvern Zetasizer Nano - ZS).

Example 7: The following materials were charged to a reactor equipped with a mechanical stirrer, thermocouple, and dry nitrogen flow: 142 grams polytetramethylene ether glycol with Mn -650 g/mol (PolyTHF^{™} 650 Polyether from BASF), 162 grams difunctional polyethylene glycol monomethyl ether (Ymer^{®} N120 from Perstorp) , 6.0 grams of trimethylolpropane (Brenntag NE), 16.5 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 274 grams methylene-*bis*-(4-cyclohexylisocyanate) (Vestanat^{®} H12MDI from Evonik Industries). The stirrer was then turned on, the mixture heated to 82 - 85 °C and stirred at this temperature for 45 minutes. 438 grams of the polymer were charged with good mixing over 5 minutes to a vessel containing 550 grams DI water at ~20 °C and 0.4 grams BYK-028 defoamer (BYK). The mixture was stirred at 34 °C for ~90 minutes. The dispersion was then chain-extended by adding over 20 minutes 37g of a 17% solution of hydrazine in water. The dispersion was covered and mixed overnight. The grit-free final product filtered through a 75-micron filter without leaving any coagulum in the filter and had the following properties: solids content = 36% (at 80% power by microwave moisture analyzer CEM Smart 6^{™}); pH 5.3; Brookfield viscosity = 306 cP (spindle #3 at 50 RPM); particle size = 58 nm (Z-average, Malvern Zetasizer Nano - ZS).

Example 8: The following materials were charged to a reactor equipped with a mechanical stirrer, thermocouple, and dry nitrogen flow: 117 grams polytetramethylene ether glycol with Mn -650 g/mol (PolyTHF^{™} 650 Polyether from BASF), 56 grams polytetramethylene ether glycol with Mn ~ 1000 g/mol (PolyTHF^{™} 650 Polyether from BASF), 156 grams difunctional polyethylene glycol monomethyl ether (Ymer^{®} N120 from Perstorp), 18.6 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 252 grams methylene-bis-(4-cyclohexylisocyanate) (Vestanat^{®} H12MDI from Evonik Industries). The stirrer was then turned on, the mixture heated to 82 - 85 °C and stirred at this temperature for 45 minutes. 434 grams of the polymer were charged with good mixing over 5 minutes to a vessel containing 550 grams DI water at ~20 °C and 0.4 grams BYK-028 defoamer (BYK). The mixture was stirred at 34 °C for ~90 minutes. The dispersion was then chain-extended by adding over 20 minutes 32g a 17% solution of hydrazine in water. The dispersion was covered and mixed overnight. The grit-free final product filtered through a 75-micron filter without leaving any coagulum in the filter and had the following properties: solids content = 36% (at 80% power by microwave moisture analyzer CEM Smart 6^{™}); pH 5.5; Brookfield viscosity = 72 cP (spindle #3 at 50 RPM); particle size = 40 nm (Z-average, Malvern Zetasizer Nano - ZS).

Comparative Example 9: The following materials were charged to a reactor equipped with a mechanical stirrer, thermocouple, and dry nitrogen blanket: 135 grams polyether-1,3-diol (Ymer^{®} N120 from Perstorp), 280 grams poly(tetrahydrofuran) polyether glycol with Mn ~ 2,000 g/mol (Terathane^{®} 2000 from The Lycra Company), 15 grams dimethylol propanoic acid (DMPA^{®} from GEO^{®} Specialty Chemicals), and 170 grams methylene-bis-(4-cyclohexylisocyanate) (Vestanat^{®} H12MDI from Evonik Industries). The stirrer was then turned on, the mixture heated to ~90 °C and stirred at this temperature for two hours. The content of the remaining NCO was then measured using a titration (ASTM D1638) with di-n-butylamine (Acros Organics) and 1.0 M HCl (J. T. Baker) and was found to be 3.8%. The prepolymer was cooled to about 88 °C, and 400 grams of it were charged with good mixing over 5 minutes to a vessel containing 550 grams DI water and 0.5 grams DEE FO^{®} PI-40 defoamer (Munzing) at 23 °C. The mixture was stirred for 1.5 hours. The dispersion was then chain-extended by adding 9.2 grams hydrazine (35 wt. % solution in water, VWR). The residual isocyanate was digested by water by mixing the dispersion at -60-65 °C for 12 hours.

Comparative Example 10: The following materials were charged to a reactor equipped with a mechanical stirrer, thermocouple, and dry nitrogen blanket: 290 grams polyether-1,3-diol (Tegomer^{®} D 3403 from Evonik Industries), 100 grams poly(tetrahydrofuran) polyether glycol with Mn - 2,000 g/mol (Terathane^{®} 2000 from The Lycra Company), 16 grams dimethylol propanoic acid (DMPA^{®} from GEO^{®} Specialty Chemicals), and 195 grams methylene-bis-(4-cyclohexylisocyanate) (Vestanat^{®} H12MDI from Evonik Industries). The stirrer was then turned on, the mixture heated to ∼105-110 °C, After stirring at this temperature for one hour, 0.003 grams Fastcat^{®} 2003 Catalyst (stannous octoate from Brenntag) were added, and the mixture stirred for another two hours. The content of the remaining NCO was then measured using a titration with di-n-butylamine (Acros Organics) and 1.0 M HCl (J. T. Baker) and was found to be 4.6%. The prepolymer was cooled to about 90 °C, and 400 grams of it were charged with good mixing over 5 minutes to a vessel containing 850 grams DI water and 0.1 grams Surfynol DF-37 defoamer (Evonik) at 23 °C. The mixture was stirred for 75 minutes. The dispersion was then chain-extended by adding 10 grams hydrazine (35 wt. % solution in water, VWR). The residual isocyanate was digested with water by mixing the dispersion at ~60-65 °C for 12 hours. The grit-free final product filtered through a 75-micron filter without leaving any coagulum in the filter and had the following properties: solids content = 32% (at 80% power by microwave moisture analyzer CEM Smart 6^{™}); pH 5.5; Brookfield viscosity = 400 cP (spindle #3 at 50 RPM); particle size = 75 nm (Z-average, Malvern Zetasizer Nano - ZS).

Comparative Example 11: The following materials were charged to a reactor equipped with a mechanical stirrer, thermocouple, and dry nitrogen blanket: 280 grams polyether-1,3-diol (Ymer^{®} N120 from Perstorp), 113 grams poly(tetrahydrofuran) polyether glycol with Mn - 2,000 g/mol (Terathane^{®} 2000 from The Lycra Company), 16 grams dimethylol propanoic acid (DMPA^{®} from GEO^{®} Specialty Chemicals), and 190 grams methylene-bis-(4-cyclohexylisocyanate) (Vestanat^{®} H12MDI from Evonik Industries). The stirrer was then turned on, the mixture heated to ~90 °C and stirred at this temperature for two hours. The content of the remaining NCO was then measured using a titration with di-n-butylamine (Acros Organics) and 1.0 M HCl (J. T. Baker) and was found to be 4.2%. The prepolymer was cooled to about 80 °C, and 400 grams of it were charged with good mixing over 5 minutes to a vessel containing 740 grams DI water and 0.3 grams DEE FO^{®} PI-40 defoamer (Munzing) at 23 °C. The mixture was stirred for 1.5 hours. The dispersion was then chain-extended by adding 10 grams hydrazine (35 wt. % solution in water, VWR). The residual isocyanate was digested by water by mixing the dispersion at ~60 °C until the disappearance of the IR peak at ~2260 cm⁻¹. The grit-free final product filtered through a 75-micron filter without leaving any coagulum in the filter and had the following properties: solids content = 35% (at 80% power by microwave moisture analyzer CEM Smart 6^{™}); pH 5.4; Brookfield viscosity = 750 cP (spindle #3 at 50 RPM).

Comparative Example 12: The following materials were charged to a reactor equipped with a mechanical stirrer, thermocouple, and dry nitrogen blanket: 140 grams polyether-1,3-diol (Tegomer^{®} D 3403 from Evonik Industries), 330 grams polypropylene oxide) polyether glycol with Mn - 2,000 g/mol (PPG-2025 from Bayer Corporation), 130 grams methylene-bis-(4-cyclohexylisocyanate) (Vestanat^{®} H12MDI from Evonik Industries) and 0.4 grams Fastcat^{®} 2003 Catalyst (stannous octoate from Brenntag). The stirrer was then turned on, the mixture heated to ~105-110 °C and stirred at this temperature for two hours. The content of the remaining NCO was then measured using a titration with di-*n*-butylamine (Acros Organics) and 1.0 M HCl (J. T. Baker) and was found to be 2.8%. The prepolymer was cooled to about 95 °C, and 400 grams of it were charged with good mixing over 5 minutes to a vessel containing 650 grams DI water at 22 °C. The mixture was stirred for 1.5 hours. The dispersion was then chain-extended by adding 10 grams hydrazine (35 wt. % solution in water, VWR). The residual isocyanate was digested with water by mixing the dispersion at ~50 °C until the disappearance of the IR peak at ~2260 cm⁻¹. The grit-free final product filtered through a 75-micron filter without leaving any coagulum in the filter and had the following properties: solids content = 38% (at 80% power by microwave moisture analyzer CEM Smart 6^{™}); pH 5.7; Brookfield viscosity = 200 cP (spindle #3 at 50 RPM); particle size = 75 nm (Z-average, Malvern Zetasizer Nano - ZS).

Example 13: The following materials were charged to a reactor equipped with a mechanical stirrer, thermocouple, and dry nitrogen flow: 120 grams polytetramethylene ether glycol with Mn -650 g/mol (PolyTHF^{™} 650 Polyether from BASF), 360 grams polyether-1,3-diol (Tegomer^{®} D 3403 from Evonik Industries), 21 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 300 grams methylene-bis-(4-cyclohexylisocyanate) (Vestanat^{®} H12MDI from Evonik Industries). The stirrer was then turned on, the mixture heated to 105 - 110 °C and stirred at this temperature for one hour. The prepolymer was cooled to about 90 °C, and 650 grams of it were charged with good mixing over 5 minutes to a vessel containing 1,400 grams DI water at ~20 °C and 0.7 grams BYK-028 defoamer (BYK). The mixture was stirred at 34 °C for ~90 minutes. The dispersion was then chain-extended by adding 14 grams ethylenediamine over 20 minutes. The dispersion was covered and mixed overnight. The grit-free final product filtered through a 100-micron filter without leaving any coagulum in the filter and had the following properties: solids content = 32% (at 80% power by microwave moisture analyzer CEM Smart 6^{™}); pH 4.7; Brookfield viscosity = 3,000 cP (spindle #3 at 20 RPM); particle size = 18 nm (Z-average, Malvern Zetasizer Nano - ZS).

Example 14: The procedure of Example 13 was followed with two exception: PolyTHF^{™} 650 was replaced with hexane adipate isophthalate polyol with Mn - 500 g/mol (Piothane^{®} 70-500 HAI from Panolam Industries International) and 1,550 gram water were used. The grit-free final product filtered through a 100-micron filter without leaving any coagulum in the filter and had the following properties: solids content = 30% (at 80% power by microwave moisture analyzer CEM Smart 6^{™}); pH 5.1; Brookfield viscosity = 1,800 cP (spindle #3 at 20 RPM); particle size = 11 nm (Z-average, Malvern Zetasizer Nano - ZS).

Example 15: The following materials were charged to a reactor equipped with a mechanical stirrer, thermocouple, and dry nitrogen flow: 80 grams 1,6-hexanediol 1,5-pentanediol bismethylcarbonate with Mn ~ 500 g/mol (Eternacoll^{™} PH-50 from UBE), 270 grams polyether-1,3-diol (Tegomer^{®} D 3403 from Evonik Industries), 16 grams dimethylol propanoic acid (DMPA^{®} from GEO^{®} Specialty Chemicals), 0.3 grams pentaerythritol tetrakis(3,5-di-tert-butyl-4-hydroxyhydrocinnamate) (Sigma-Aldrich), and 235 grams methylene-bis-(4-cyclohexylisocyanate) (Vestanat^{®} H12MDI from Evonik Industries). The stirrer was then turned on, the mixture heated to 105 - 110 °C and stirred at this temperature for one hour. The prepolymer was cooled to about 90 °C, and 400 grams of it were charged with good mixing over 5 minutes to a vessel containing 910 grams DI water at ~20 °C and 0.4 grams BYK-028 defoamer (BYK). The mixture was stirred at 34 °C for ~90 minutes. The dispersion was then chain-extended by adding over 20 minutes 34 grams of 35% solution of ethylenediamine in water. The dispersion was covered and mixed overnight. The grit-free final product filtered through a 100-micron filter without leaving any coagulum in the filter and had the following properties: solids content = 32% (at 80% power by microwave moisture analyzer CEM Smart 6^{™}); pH 7.0; Brookfield viscosity = 2,300 cP (spindle #10 at 2.5 RPM); particle size = 13 nm (Z-average, Malvern Zetasizer Nano - ZS).

Example 16: The following materials were charged to a reactor equipped with a mechanical stirrer, thermocouple, and dry nitrogen blanket: 216 grams polyether-1,3-diol (Ymer^{®} N120 from Perstorp), 220 grams poly(tetrahydrofuran) polyether glycol with Mn ~ 650 g/mol (Terathane^{®} 650 from The Lycra Company), 22 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 340 grams methylene-bis-(4-cyclohexylisocyanate) (Vestanat^{®} H12MDI from Evonik Industries). The stirrer was then turned on, the mixture heated to ~82-85 °C and stirred at this temperature for an hour. Then 650 grams of the prepolymer were charged with good mixing over 15 minutes to a vessel containing 875 grams DI water and 0.6 grams BYK-028 defoamer (BYK) at ~20 °C. The mixture was stirred for ∼1.5 hours. The dispersion was then chain-extended by adding 27 grams hydrazine (35 wt. % solution in water, VWR). The residual isocyanate was digested by water by mixing the dispersion at ~60-65 °C for 12 hours. The grit-free final product filtered through a 100-micron filter without leaving any coagulum in the filter and had the following properties: solids content = 39.5% (at 80% power by microwave moisture analyzer CEM Smart 6^{™}); pH 5.5; Brookfield viscosity = 1,100cP (spindle #3 at 2 RPM); particle size = 35 nm (Z-average, Malvern Zetasizer Nano - ZS).

Example 17: The following materials were charged to a reactor equipped with a mechanical stirrer, thermocouple, and dry nitrogen flow: 130 grams polytetramethylene ether glycol with Mn -650 g/mol (PolyTHF^{™} 650 Polyether from BASF), 216 grams polyether-1,3-diol (Tegomer^{®} D 3403 from Evonik Industries), 57 grams dimethylol propanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 400 grams methylene-bis-(4-cyclohexylisocyanate) (Vestanat^{®} H12MDI from Evonik Industries). The stirrer was then turned on, the mixture heated to 105 - 110 °C and stirred at this temperature for one hour. The prepolymer was cooled to about 90 °C, and 600 grams of it were charged with good mixing over 5 minutes to a vessel containing 1,170 grams DI water at ~20 °C and 0.6 grams BYK-028 defoamer (BYK). The mixture was stirred at 34 °C for ~90 minutes. The dispersion was then chain-extended by adding over 20 minutes 30 grams 35% solution of hydrazine in water. The dispersion was covered and mixed overnight. The residual isocyanate was digested by water by mixing the dispersion at ~60-65 °C for 12 hours. The grit-free final product filtered through a 100-micron filter without leaving any coagulum in the filter and had the following properties: solids content = 33.5% (at 80% power by microwave moisture analyzer CEM Smart 6^{™}); pH 7.0; Brookfield viscosity = 800 cP (spindle #3 at 5 RPM); particle size = 30 nm (Z-average, Malvern Zetasizer Nano - ZS).

Example 18: The following materials were charged to a reactor equipped with a mechanical stirrer, thermocouple, and dry nitrogen flow: 123 grams hexane adipate isophthalate polyol with Mn - 500 g/mol (Piothane^{®} 70-500 HAI from Panolam Industries International), 120 grams polyether-1,3-diol (Tegomer^{®} D 3403 from Evonik Industries), 240 grams methylene-bis-(4-cyclohexylisocyanate) (Vestanat^{®} H12MDI from Evonik Industries) and 500 grams N-methyl-2-pyrrolidone. The stirrer was then turned on, the mixture heated to 105 - 110 °C and stirred at this temperature for 30 minutes. The mixture was cooled to ~95 °C, and 18 grams dimethylol propanoic acid (DMPA^{®} from GEO^{®} Specialty Chemicals) were added to the reactor. The mixture was stirred at 93 - 99 °C for 30 minutes, cooled to ~38 °C, and chain-extended by a gradual addition of a solution of 65 grams isophorone diamine in 200 grams N-methyl-2-pyrrolidone. The residual isocyanate was digested by in a 60 °C oven overnight. Solids content of the product was measured at 51.1%.

Example 19: The following materials were charged to a reactor equipped with a mechanical stirrer, thermocouple, and dry nitrogen flow: 100 grams hexane adipate isophthalate polyol with Mn ~ 500 g/mol (Piothane^{®} 70-500 HAI from Panolam Industries International), 84 grams hexane adipate isophthalate polyol with Mn ~ 1,000 g/mol (Piothane^{®} 70-1000 HAI from Panolam Industries International), 60 grams polyether-1,3-diol (Tegomer^{®} D 3403 from Evonik Industries), 240 grams methylene-*bis*-(4-cyclohexylisocyanate) (Vestanat^{®} H12MDI from Evonik Industries) and 500 grams N-methyl-2-pyrrolidone. The stirrer was then turned on, the mixture heated to 105 - 110 °C and stirred at this temperature for 30 minutes. The mixture was cooled to ~95 °C, and 18 grams dimethylol propanoic acid (DMPA^{®} from GEO^{®} Specialty Chemicals) were added to the reactor. The mixture was stirred at 93 - 99 °C for 30 minutes, cooled to ~38 °C, and chain-extended by a gradual addition of a solution of 66 grams isophorone diamine in 200 grams N-methyl-2-pyrrolidone. After one hour, residual isocyanate was consumed by a gradual addition of 28 grams diethanolamine. Solids content of the product was measured at 50.7%.

Example 20: 94.4 parts antifog hydrophilic polyurethane of Example 1 were mixed with 0.2 parts of a polyether siloxane based defoamer (Surfynol DF-58), 0.2 parts of a polyether modified siloxane surfactant (BYK 349), 0.2 parts nonionic urethane-based rheology modifier (DOW Acrysol RM-8W), and 5 part of 2-butoxyethanol. The composition was then mixed at 500 RPMS using a paddle blade for 5 minutes.

Example 21: 89.2 parts antifog hydrophilic polyurethane of Example 1 were mixed with 0.2 parts of a polyether siloxane based defoamer (BYK 028), 0.2 parts of a polyether modified siloxane surfactant (BYK 347), 0.2 parts nonionic urethane-based rheology modifier (DOW Acrysol RM-8W), 5 part of 2-butoxyethanol, and 5 part de-ionized water. The composition was then mixed at 500 RPMS using a paddle blade for 5 minutes.

Example 22: 89.2 parts antifog hydrophilic polyurethane of Example 1 were mixed with 0.2 parts of a polyether siloxane based defoamer (BYK 028), 0.2 parts of a polyether modified siloxane surfactant (BYK 347), 0.2 parts nonionic urethane-based rheology modifier (DOW Acrysol RM-8W), 5 part of dipropylene glycol n-butyl ether and 5 part de-ionized water. The composition was then mixed at 500 RPMS using a paddle blade for 5 minutes.

Example 23: 89.2 parts antifog hydrophilic polyurethane of Example 1 were mixed with 0.2 parts of a polyether siloxane based defoamer (Surfynol DF-58), 0.2 parts of a polyether modified siloxane surfactant (BYK 349), 0.2 parts nonionic urethane-based rheology modifier (DOW Acrysol RM-8W), 5 part of dipropylene glycol n-butyl ether and 5 part de-ionized water. The composition was then mixed at 500 RPMS using a paddle blade for 5 minutes.

Example 24: An anti-fog composition was mixed using Example 1 as the hydrophilic polyurethane as described in Example 20. The composition was then applied to a 1/8" thick clear TPU film using a 6-mil bird bar supplied by BYK-Gardner. The coating was allowed to dry at room temperature for 24 hours. The Antifog Test Method was then conducted, with the results being described in Table 1, which lists Exposure Time ("ET") in seconds, and the gloss unit measurement at each exposure time for the sample of Example 24 ("Ex. 24") versus an uncoated 1/8" thick TPU film ("UC"):

**Table 1**

| ET | Ex. 24 | UC |
|---|---|---|
| 0 | 70 | 70 |
| 5 | 70 | 16 |
| 10 | 70 | 15 |
| 15 | 70 | 15 |
| 20 | 70 | 15 |
| 25 | 70 | 15 |
| 30 | 70 | 15 |
| 35 | 70 | 15 |
| 40 | 70 | 15 |
| 45 | 70 | 15 |
| 50 | 70 | 15 |
| 55 | 70 | 15 |
| 60 | 70 | 15 |

In addition to good antifog properties, the compositions of Examples 20 through 24 demonstrated good adhesion, blocking resistance, and abrasion resistance.

Comparative Example 25: The anti-fog composition was mixed using Comparative Example 2 as the hydrophilic polyurethane as described in Example 20. The composition was then applied to a 1/8" thick clear TPU film using a 6-mil bird bar supplied by BYK-Gardner. The coating was allowed to dry at room temperature for 24 hours. The Antifog Test Method was then conducted, with the results being described in Table 2, which lists Exposure Time ("ET") in seconds, and the gloss unit measurement at each exposure time for the sample of Comparative Example 25 ("C. Ex. 25") versus an uncoated 1/8" thick TPU film ("UC"):

**Table 2**

| ET | C. Ex. 25 | UC |
|---|---|---|
| 0 | 70 | 70 |
| 5 | 70 | 16 |
| 10 | 70 | 15 |
| 15 | 70 | 15 |
| 20 | 70 | 15 |
| 25 | 70 | 15 |
| 30 | 70 | 15 |
| 35 | 70 | 15 |
| 40 | 70 | 15 |
| 45 | 70 | 15 |
| 50 | 70 | 15 |
| 55 | 70 | 15 |
| 60 | 70 | 15 |

The antifog properties of the composition of Comparative Example 25 were comparative with the composition of Example 24; however, the abrasion resistance of the composition of Comparative Example 25 was poor.

In certain of the examples and comparative examples described above (collectively referred to as "samples"), the samples were tested according to one or more of the following methods. Coatings made from the samples were uniformly applied to a clear 6 in. by 6 in. thermoplastic polyurethane substrate using a foam brush at 8 mils wet thickness. The coatings were then allowed to dry for 5 min. at ambient conditions, followed by 30 min. at 82 °C. Adhesion was determined by both a crosshatch tape method and by forced delamination where a sharp blade was forced between the coating and substate, if possible. Abrasion resistance was determined by first cutting a 1 in. by 1 in. square of a standard green Scotch-Brite^{™} Hand Pad (available from 3M), and then rubbing the square across the coating ten times in the same direction using consistent pressure; the degree of scratching was then visually evaluated, and the abrasion resistance was rated as excellent, good, fair, or poor. Blocking resistance was tested according to ASTM D 4946 Standard Test Method for Blocking Resistance of Architectural Paints.

## Claims

1. An antifog hydrophilic polyurethane composition comprising:
a. from 20% to 70% by weight side-chain ethylene oxide monomeric units, based on the total weight of the polyurethane;
b. from 10% to 100% by weight of at least one low-molecular-weight main-chain polyol having a number-average molecular weight as determined according to the description of from 200 to 900 g/mol, based on the total weight of main-chain polyols present in the polyurethane; and
c. an amount of acid-functional units effective to provide an acid number of from 1 to 100 mg KOH/g to the polyurethane.

2. The polyurethane composition of claim 1, comprising from 25% to 35% by weight side-chain ethylene oxide monomeric units, based on the total weight of the polyurethane.

3. The polyurethane composition of either claim 1 or claim 2, comprising less than 25% by weight main-chain ethylene oxide monomeric units, based on the total weight of the polyurethane.

4. The polyurethane composition of any one of claims 1 to 3, comprising from 20% to 100% by weight of the at least one low-molecular-weight main-chain polyol having a number-average molecular weight as determined according to the description of from 200 to 900 g/mol, based on the total weight of main-chain polyols present in the polyurethane.

5. The polyurethane composition of any one of claims 1 to 4, comprising an amount of acid-functional units effective to provide an acid number of from 1 to 15 mg KOH/g to the polyurethane.

6. The polyurethane composition of any one of claims 1 to 4, comprising an amount of acid-functional units effective to provide an acid number of from 10 to 100 mg KOH/g to the polyurethane.

7. The polyurethane composition of any one of claims 1 to 6, wherein the acid-functional units comprise at least one of dimethylol propanoic acid, dimethylol butanoic acid, or carboxylated polyols.

8. The polyurethane composition of any one of claims 1 to 7, wherein at least one acid group present in the polyurethane is salted with a biguanide free base, optionally wherein the biguanide free base comprises a bisbiguanide free base.

9. The polyurethane composition of claim 8, wherein the biguanide free base comprises at least one of chlorhexidine free base, alexidine free base, polyhexanide free base, or polyaminopropyl biguanide free base.

10. The polyurethane composition of either claim 8 or claim 9, wherein the at least one acid group is salted with the biguanide free base to create an ionic salt bond between the at least one acid group and the biguanide free base.

11. The polyurethane composition of any one of claims 1 to 10, comprising: from 10% to 95% by weight of the at least one low-molecular-weight main-chain polyol having a number-average molecular weight as determined according to the description of from 200 to 900 g/mol, based on the total weight of main-chain polyols present in the polyurethane; and at least 5% by weight of at least one main-chain second polyol having a number-average molecular weight as determined according to the description of at from 1,000 to 3,000 g/mol, based on the total weight of main-chain polyols present in the polyurethane.

12. A solvent-borne polyurethane composition comprising the polyurethane composition of any one of claims 1 to 11.

13. A polyurethane dispersion comprising the polyurethane composition of any one of claims 1 to 11.

14. A thermoplastic polyurethane composition comprising the polyurethane composition of any one of claims 1 to 11.

15. A coating composition comprising at least one of the polyurethane composition of any one of claims 1 to 11, the solvent-borne polyurethane composition of claim 12, the polyurethane dispersion of claim 13, or the thermoplastic polyurethane composition of claim 14.

16. A method of reducing fogging of a surface of a substrate comprising applying the coating composition of claim 15 to the surface.

## Patentansprüche

1. Hydrophile Antibeschlagpolyurethanzusammensetzung, umfassend:
a. von zu 20 bis 70 Gew.-% Seitenketten-Ethylenoxid-Monomereinheiten, basierend auf dem Gesamtgewicht des Polyurethans;
b. von zu 10 bis 100 Gew.-% mindestens ein Hauptkettenpolyol mit niedrigem Molekulargewicht, das ein zahlenmittleren Molekulargewicht, wie gemäß der Beschreibung bestimmt, von 200 bis 900 g/mol aufweist, basierend auf dem Gesamtgewicht der Hauptkettenpolyole, die in dem Polyurethan vorhanden sind; und
c. eine Menge an säurefunktionellen Einheiten, die wirksam ist, um dem Polyurethan eine Säurezahl von 1 bis 100 mg KOH/g bereitzustellen.

2. Polyurethanzusammensetzung nach Anspruch 1, umfassend von zu 25 bis 35 Gew.-% Seitenketten-Ethylenoxid-Monomereinheiten, basierend auf dem Gesamtgewicht des Polyurethans.

3. Polyurethanzusammensetzung nach Anspruch 1 oder 2, umfassend weniger als zu 25 Gew.-% Hauptketten-Ethylenoxid-Monomereinheiten, basierend auf dem Gesamtgewicht des Polyurethans.

4. Polyurethanzusammensetzung nach einem der Ansprüche 1 bis 3, umfassend von zu 20 bis 100 Gew.-% das mindestens eine Hauptkettenpolyol mit niedrigem Molekulargewicht, das ein zahlenmittleres Molekulargewicht, wie gemäß der Beschreibung bestimmt, von 200 bis 900 g/mol aufweist, basierend auf dem Gesamtgewicht der Hauptkettenpolyole, die in dem Polyurethan vorhanden sind.

5. Polyurethanzusammensetzung nach einem der Ansprüche 1 bis 4, umfassend eine Menge an säurefunktionellen Einheiten, die wirksam ist, um dem Polyurethan eine Säurezahl von 1 bis 15 mg KOH/g bereitzustellen.

6. Polyurethanzusammensetzung nach einem der Ansprüche 1 bis 4, umfassend eine Menge an säurefunktionellen Einheiten, die wirksam ist, um dem Polyurethan eine Säurezahl von 10 bis 100 mg KOH/g bereitzustellen.

7. Polyurethanzusammensetzung nach einem der Ansprüche 1 bis 6, wobei die säurefunktionellen Einheiten mindestens eines von Dimethylolpropansäure, Dimethylolbutansäure oder carboxylierten Polyolen umfassen.

8. Polyurethanzusammensetzung nach einem der Ansprüche 1 bis 7, wobei mindestens eine Säuregruppe, die in dem Polyurethan vorhanden ist, mit einer freien Biguanidbase gesalzen ist, optional wobei die freie Biguanidbase eine freie Bisbiguanidbase umfasst.

9. Polyurethanzusammensetzung nach Anspruch 8, wobei die freie Biguanidbase mindestens eines von freier Chlorhexidinbase, freier Alexidinbase, freier Polyhexanidbase oder freier Polyaminopropylbiguanidbase umfasst.

10. Polyurethanzusammensetzung nach Anspruch 8 oder 9, wobei die mindestens eine Säuregruppe mit der freien Biguanidbase gesalzen ist, um eine ionische Salzbindung zwischen der mindestens einen Säuregruppe und der freien Biguanidbase zu erzeugen.

11. Polyurethanzusammensetzung nach einem der Ansprüche 1 bis 10, umfassend: von zu 10 bis 95 Gew.-% das mindestens eine Hauptkettenpolyol mit niedrigem Molekulrgewicht, das ein zahlendurchschnittliches Molekulargewicht, wie gemäß der Beschreibung bestimmt, von 200 bis 900 g/mol aufweist, basierend auf dem Gesamtgewicht der Hauptkettenpolyole, die in dem Polyurethan vorhanden sind; und mindestens zu 5 Gew.-% mindestens zweites ein Hauptkettenpolyol, das ein zahlenmittleres Molekulargewicht, wie gemäß der Beschreibung bestimmt, von 1.000 bis 3.000 g/mol aufweist, basierend auf dem Gesamtgewicht der Hauptkettenpolyole, die in dem Polyurethan vorhanden sind.

12. Lösungsmittelhaltige Polyurethanzusammensetzung, umfassend die Polyurethanzusammensetzung nach einem der Ansprüche 1 bis 11.

13. Polyurethandispersion, umfassend die Polyurethanzusammensetzung nach einem der Ansprüche 1 bis 11.

14. Thermoplastische Polyurethanzusammensetzung, umfassend die Polyurethanzusammensetzung nach einem der Ansprüche 1 bis 11.

15. Beschichtungszusammensetzung, umfassend mindestens eines von der Polyurethanzusammensetzung nach einem der Ansprüche 1 bis 11, der lösungsmittelhaltigen Polyurethanzusammensetzung nach Anspruch 12, der Polyurethandispersion nach Anspruch 13 oder der thermoplastischen Polyurethanzusammensetzung nach Anspruch 14.

16. Verfahren zum Reduzieren eines Beschlagens einer Oberfläche eines Substrats, umfassend das Auftragen der Beschichtungszusammensetzung nach Anspruch 15 auf die Oberfläche.

## Revendications

1. Composition de polyuréthane hydrophile antibuée comprenant :
a. de 20 % à 70 % en poids de motifs monomères d'oxyde d'éthylène de chaîne latérale, sur la base du poids total du polyuréthane ;
b. de 10 % à 100 % en poids d'au moins un polyol de chaîne principale de faible masse moléculaire ayant une masse moléculaire moyenne en nombre, telle que déterminée selon la description, allant de 200 à 900 g/mol, sur la base du poids total des polyols de chaîne principale présents dans le polyuréthane ; et
c. une quantité de motifs à fonctionnalité acide efficace pour fournir un indice d'acidité allant de 1 à 100 mg KOH/g au polyuréthane.

2. Composition de polyuréthane selon la revendication 1, comprenant de 25 % à 35 % en poids de motifs monomères d'oxyde d'éthylène de chaîne latérale, sur la base du poids total du polyuréthane.

3. Composition de polyuréthane selon soit la revendication 1 soit la revendication 2, comprenant moins de 25 % en poids de motifs monomères d'oxyde d'éthylène de chaîne principale, sur la base du poids total du polyuréthane.

4. Composition de polyuréthane selon l'une quelconque des revendications 1 à 3, comprenant de 20 % à 100 % en poids de l'au moins un polyol de chaîne principale de faible masse moléculaire ayant une masse moléculaire moyenne en nombre, telle que déterminée selon la description, allant de 200 à 900 g/mol, sur la base du poids total des polyols de chaîne principale présents dans le polyuréthane.

5. Composition de polyuréthane selon l'une quelconque des revendications 1 à 4, comprenant une quantité de motifs à fonctionnalité acide efficace pour fournir un indice d'acidité allant de 1 à 15 mg KOH/g au polyuréthane.

6. Composition de polyuréthane selon l'une quelconque des revendications 1 à 4, comprenant une quantité de motifs à fonctionnalité acide efficace pour fournir un indice d'acidité allant de 10 à 100 mg KOH/g au polyuréthane.

7. Composition de polyuréthane selon l'une quelconque des revendications 1 à 6, dans laquelle les unités à fonctionnalité acide comprennent au moins l'un parmi acide diméthylol propanoïque, acide diméthylol butanoïque, ou polyols carboxylés.

8. Composition de polyuréthane selon l'une quelconque des revendications 1 à 7, dans laquelle au moins un groupe acide présent dans le polyuréthane est sous forme de sel avec une base exempte de biguanide, facultativement dans laquelle la base exempte de biguanide comprend une base exempte de bisbiguanide.

9. Composition de polyuréthane selon la revendication 8, dans laquelle la base exempte de biguanide comprend au moins l'une parmi base exempte de chlorhexidine, base exempte d'alexidine, base exempte de polyhexanide, ou base exempte de polyaminopropyl biguanide.

10. Composition de polyuréthane selon soit la revendication 8 soit la revendication 9, dans laquelle l'au moins un groupe acide est sous forme de sel avec la base exempte de biguanide afin de créer une liaison saline ionique entre l'au moins un groupe acide et la base exempte de biguanide.

11. Composition de polyuréthane selon l'une quelconque des revendications 1 à 10, comprenant : de 10 % à 95 % en poids de l'au moins un polyol de chaîne principale de faible masse moléculaire ayant une masse moléculaire moyenne en nombre, telle que déterminée selon la description, allant de 200 à 900 g/mol, sur la base du poids total des polyols de chaîne principale présents dans le polyuréthane ; et au moins 5 % en poids d'au moins un second polyol de chaîne principale ayant une masse moléculaire moyenne en nombre, telle que déterminée selon la description, allant de 1 000 à 3 000 g/mol, sur la base du poids total des polyols de chaîne principale présents dans le polyuréthane.

12. Composition de polyuréthane à base de solvant comprenant la composition de polyuréthane selon l'une quelconque des revendications 1 à 11.

13. Dispersion de polyuréthane comprenant la composition de polyuréthane selon l'une quelconque des revendications 1 à 11.

14. Composition de polyuréthane thermoplastique comprenant la composition de polyuréthane selon l'une quelconque des revendications 1 à 11.

15. Composition de revêtement comprenant au moins l'un parmi la composition de polyuréthane selon l'une quelconque des revendications 1 à 11, la composition de polyuréthane à base de solvant selon la revendication 12, la dispersion de polyuréthane selon la revendication 13, ou la composition de polyuréthane thermoplastique selon la revendication 14.

16. Procédé de réduction de la formation de buée d'une surface d'un substrat, comprenant l'application de la composition de revêtement selon la revendication 15 sur la surface.
